# FASCICULE DE BREVET EUROPEEN

(11) **EP 2 451 712 B1**
(45) Date de publication et mention de la délivrance du brevet: **04.09.2013**
(21) Numéro de dépôt: 10729866.3
(22) Date de dépôt: 05.07.2010
(51) Int. Cl.: B64G 7/00, G01N 33/22, F02K 9/96

(54) **SYSTEME ET PROCEDE D'ESSAI DE DISPOSITIFS A POUDRES**
SYSTEME UND VERFAHREN ZUR PRÜFUNG VON TREIBLADUNGSANORDNUNGEN
SYSTEM AND METHOD FOR TESTING PROPELLANT DEVICES

(30) Priorité: 10.07.2009 FR 0954810
(43) Date de publication de la demande: 16.05.2012
(73) Titulaire: ASTRIUM SAS, 75016 Paris (FR)
(72) Inventeur: DERODE, Thibault, F-33000 Bordeaux (FR)
(74) Mandataire: Coquel, Jean-Marc
(86) Numéro de dépôt international: PCT/EP2010/059566
(87) Numéro de publication internationale: WO 2011/003868

(56) Documents cités:
- RU-C2- 2 267 025
- US-A- 5 458 071
- US-A1- 2008 034 851
- US-B1- 6 964 699

## Description

La présente invention concerne un système et un procédé d'essai de dispositifs à poudres et en particulier un système d'essai avec confinement et traitement des gaz de combustion particulièrement adapté à des poudres propulsives.

Les essais de poudres propulsives sont en effet le plus souvent réalisés à l'air libre, et de ce fait sont polluants pour l'environnement par les gaz et/ou effluent dégagés lors de ces essais.

Néanmoins, il a été proposé de rendre ces essais moins polluants, en récupérant les gaz brulés dans un réservoir étanche, puis de traiter ces effluents. C'est le cas de RU 2 267 023 ainsi que des documents US5458071, US2008 0034851 et US 6964699.

Dans le domaine proche de la destruction des déchets pyrotechniques, on utilise aussi essentiellement des procédés de combustion. Les moyens adaptés pour ce faire sont des « fours », mais qui sont souvent aussi des « chambres de détonation », car il existe toujours un risque de détonation pour ce type d'opération sur ces déchets. Ces fours sont alors des chambres de détonation blindées.

Le document US 5 649 324 évoque les traitements qui sont alors nécessaires des effluents, mais également le problème des déflagrations ou des détonations, ainsi qu'une certaine volonté de valoriser des traitements de déchets en récupérant l'énergie thermique dégagée lors du traitement.

On voit donc que dans l'état connu de la technique, soit les opérations sont faites à l'air libre, ce qui rend la récupération et le traitement des effluents difficile voire impossible, soit les opérations ont lieu en milieu confiné ; on peut alors récupérer puis traiter les effluents, mais le volume de confinement est limité à quelques m³, ce qui n'est pas compatible avec des activités d'essais; en particulier d'essais sur de gros éléments où l'on a besoin d'un accès aisé à toutes les faces de cet élément.

En outre, les procédés de traitement de dépollution connus ou envisagés sont des procédés de traitement en continu du flux de gaz de combustion produit.

Ceci, compte tenu des très forts débits de gaz de combustion, par exemple dans le cas d'un essai de propulseur, nécessite un dimensionnement important de l'unité de traitement des gaz pour absorber le débit entrant donc un surdimensionnement, ce qui rend très difficile et couteux l'utilisation des procédés modernes catalytiques de traitement des oxydes d'azote.

Au vu de cet état de l'art, la présente invention a pour objet de réaliser un système d'essai de dispositifs à poudre adapté à réaliser des essais sur des ensembles fonctionnels, en particulier de grand gabarit, et permettant un traitement différé des polluants générés par la combustion de poudres telles que des poudres propulsives de lanceurs ou missiles.

La présente invention a donc pour objectif une installation de mise en oeuvre de propergols solides ou d'explosifs en mode combustion permettant d'assurer :
- le confinement des rejets de combustion,
- les conditions de sécurité en mode dégradé (explosion) du fonctionnement de l'installation,
- un dimensionnement optimisé des installations de traitement des gaz, et,
- un fonctionnement efficace des procédés de dépollution moderne.

Afin d'optimiser l'unité de traitement des gaz, un des principes de l'invention consiste à séparer dans le temps les phases de génération des effluents et leur traitement, ce qui permet de s'affranchir des contraintes de débit.

Plus précisément, la présente invention concerne un système d'essai de dispositifs à poudres telles que des propergols adaptée à réaliser des essais sur des sous ensembles de grands gabarits caractérisé en ce qu'il comprend une enceinte de confinement pourvue de moyens adaptés à la rendre étanche et une unité de traitement de gaz, l'enceinte et l'unité de traitement des gaz étant reliées par des moyens d'amenée de gaz pilotables sous forme d'une fuite contrôlée en sorte d'extraire un débit calibré de gaz issus des essais de l'enceinte vers l'unité de traitement.

Le système d'essai de l'invention comprend au niveau des moyens d'amenée une prise d'air atmosphérique et des moyens adaptés à mélanger lesdits gaz à un flux d'air à pression atmosphérique réalisant une dilution desdits gaz.

Elle comprend préférablement des moyens d'asservissement des moyens d'amenée pilotables en fonction d'une mesure d'une concentration d'un gaz polluant de référence.

Avantageusement, le système comprend des moyens d'apport d'air extérieur dans l'enceinte, ces moyens d'apport comprenant un mécanisme d'ouverture motorisé et commandé à distance adapté à compenser la pression de l'enceinte lors de l'extraction de gaz réalisée par l'unité de traitement des gaz, le système comportant en outre des moyens adaptés à asservir l'ouverture du mécanisme en fonction d'une consigne d'atteinte et de maintien de la pression atmosphérique dans l'enceinte de confinement.

Selon un mode de réalisation particulier, le volume de l'enceinte est adapté, pour une masse de propergols solides de l'ordre de 1 à 100 kg, à limiter la surpression dans l'enceinte à quelques centaines de millibars, par exemple de 0 à 200 mbars.

Selon un mode de réalisation préférentiel, le volume de l'enceinte en m³ est de l'ordre de cent à cent cinquante fois la masse en kg des poudres.

Le système est avantageusement tel que l'enceinte de confinement est réalisée à partir d'un local en béton.

Selon un mode de réalisation particulier, l'enceinte de confinement comprend une porte étanche munie de moyens soupapes de sécurité.

Les moyens soupapes de sécurité sont préférablement constitués par une pluralité d'évents d'explosions assemblés sur un treillis métallique.

Avantageusement le système comprend une ou plusieurs tôles d'acier côté face interne du local qui obturent chacune des traversées de parois lors de la mise en pression de l'enceinte.

L'unité de traitement du système comprend préférablement des moyens de dépollution des gaz adaptés à réaliser au moins l'un des traitements suivants:
- une élimination d'acide chlorhydrique par injection d'un sorbant sec,
- une récupération des poussières,
- une élimination des oxydes d'azote par réduction catalytique sélective,
- une élimination du monoxyde de carbone par oxydation catalytique.

L'invention concerne en outre un procédé d'essai de dispositifs à poudres avec traitement des effluents rejetés par ces essais pour lequel:
- on procède à un essai de combustion des poudres du dispositif avec confinement des rejets de combustion dans une enceinte d'un volume adapté à recevoir un surcroît de gaz avec une variation de pression réduite, l'enceinte de confinement étant mise en surpression en cours d'essai,
- on ramène l'enceinte de confinement à la pression atmosphérique par transfert de gaz vers une unité de traitement des gaz sans rejet à l'atmosphère avec un débit adapté aux performances de l'unité de traitement et,
- on combine une dilution des gaz dans une veine d'air au transfert des gaz vers l'unité de traitement.

Selon un mode de réalisation particulier du procédé, on finalise la dépollution de l'enceinte de confinement par un balayage d'air extérieur qui entraine les effluents résiduels vers l'unité de traitement.

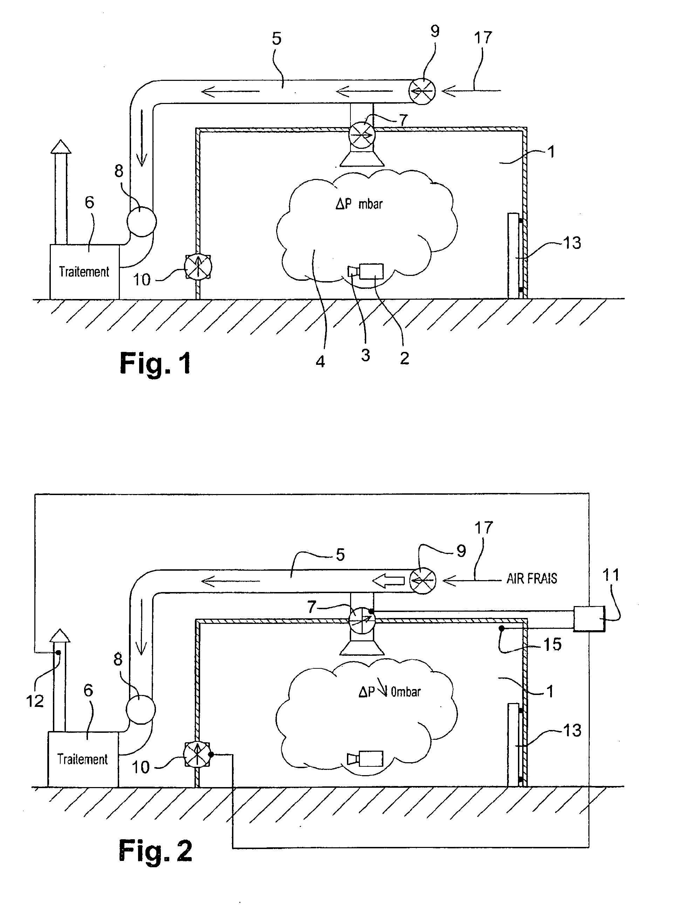

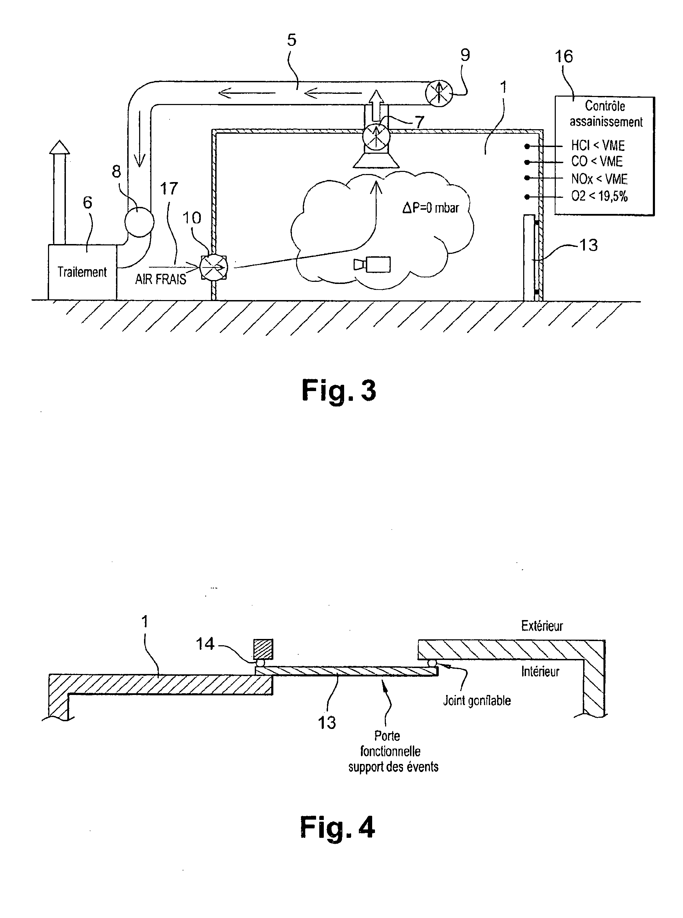

D'autres caractéristiques et avantages de l'invention seront apparents à la lecture de la description qui suit d'un exemple de réalisation non limitatif de l'invention accompagnée des dessins qui représentent:
en figure 1 : une vue schématique d'un système selon l'invention comportant une enceinte et une unité de traitement en phase d'essai ;
en figure 2 : le système de la figure 1 avec enceinte dans une phase de dépollution avec chute de pression et transfert de gaz vers l'unité de traitement ;
en figure 3 : le système de la figure 1 dans une phase de dépollution avec balayage d'air extérieur ;
en figure 4 : une vue schématique de dessus d'une porte et d'une partie de l'enceinte la recevant.

L'invention prévoit notamment un système comportant une enceinte de confinement conçue pour résister aux conditions normales générées par des combustions de propergols ou autres produits combustibles et aussi aux circonstances accidentelles de type explosion.

Cette enceinte est adaptée par exemple à recevoir par exemple un élément de satellite ou un élément de lanceur spatial de type impulseur.

La figure 1 donne une vue schématique du système.

Il comporte l'enceinte de confinement 1 recevant l'objet à tester, ici un impulseur 2 de satellite avec sa tuyère d'éjection 3 et les gaz propulsifs émis 4, des conduits 5 et une unité de traitement 6.

Les conduits 5 sont destinés à amener les gaz depuis l'enceinte vers l'unité de traitement dans laquelle l'opération de dépollution des gaz est réalisée.

L'enceinte de confinement des gaz de l'invention comporte un volume adapté à toute une gamme d'essais pyrotechniques avec impulseurs 3.

Selon un exemple de réalisation, elle est constituée d'un local de près de 6 000 m3 acceptant jusqu'à 50 kg de propergol solide.

Un local de l'ordre de cent à cent cinquante fois la masse en kg de poudres est ainsi une bonne mesure pour le système d'essais de l'invention.

Les opérateurs peuvent donc travailler dans l'enceinte de confinement pour mettre en place l'essai.

Le volume disponible autorise des essais sur des sous-ensembles équipés d'objets pyrotechniques à l'échelle 1. L'exemple représente un satellite 2 avec la tuyère 3 de son impulseur.

Le volume de l'enceinte est adapté à un confinement total des gaz avant le traitement de dépollution.

Ceci permet de dé-corréler le dimensionnement de l'unité de traitement des gaz du fort débit observé sur un fonctionnement nominal d'impulseur et de dimensionner l'unité 6 de traitement des gaz sur une gamme de débit courante dans l'ingénierie de traitement des gaz,

Le système d'essai de l'invention permet ainsi de traiter, au-delà des rejets d'essais de combustion de propergol solide, les rejets d'autres essais énergétiques dégageant des gaz toxiques tels que les essais d'incendie sur des éprouvettes dont le gabarit excède les possibilités des dispositifs d'essais existant.

Selon l'exemple de réalisation de l'invention, l'enceinte de confinement 1 est un local de travail à structure béton, dimensionné à la fois pour tenir la charge statique, pression interne de fonctionnement nominal, et pour tenir les sollicitations accidentelles pouvant survenir.

La structure est dimensionnée de façon connue en déformation élastique à la montée en pression issue de la combustion des propergols.

La problématique de confinement concerne alors seulement les issues, accès et autres traversées de parois telles que la bouche d'extraction des gaz. Le confinement y est réalisé par ajout d'une tôle d'acier côté face interne du local qui obture chacune des traversées de parois lors de l'essai et de la mise en pression résultante.

Cette tôle, dimensionnée en déformation élastique à la contrainte statique de l'essai, comporte sur sa périphérie un joint acceptant les conditions thermiques de l'essai. Du fait de son positionnement interne, chaque paroi est plaquée contre la structure lors de la mise en pression du local, créant ainsi les conditions d'étanchéité requises.

Dans le mode de réalisation pour lequel l'enceinte est un bâtiment de génie civil, ce local comporte une structure résistante à des sollicitations dynamiques accidentelles supplémentaires à la sollicitation quasi statique du fonctionnement nominal et comporte au moins une surface capable de rompre lors de ces sollicitations accidentelles et de tenir la charge du fonctionnement nominal.

Pour une exploitation en sécurité de l'installation, on prévoit ainsi une soupape de sécurité, qui permet de protéger l'enceinte en cas de surpression excédent les valeurs de dimensionnement.

On dote pour ce faire l'enceinte d'une partie de paroi résistante à la pression nominale de confinement mais adaptée à ne pas résister aux sollicitations accidentelles à la manière d'un fusible.

La solution proposée par l'invention consiste à utiliser la technologie des évents d'explosion, surfaces calibrées pour résister à une pression de travail définie et pour rompre à une pression accidentelle également précisément définie, qui offrent une surface utile maîtrisée pour libérer les gaz générés par une explosion.

L'échellé maximale existante pour cette technologie est de l'ordre de 1 à 2 m2 pour un évent.

L'ordre de grandeur de la surface formant fusible nécessaire à la tenue de la structure, pour éviter un dimensionnement prohibitif du génie civil, est de l'ordre de plusieurs dizaines de mètres carrés.

La solution technique proposée par la présente invention consiste à constituer la surface nécessaire par l'assemblage d'autant d'évents élémentaires que nécessaires, plusieurs dizaines, sur un treillis métallique dimensionné en déformation élastique à la charge statique nominale d'un essai.

Ce damier d'évents élémentaires, motorisé et coulissant, devient la porte d'accès 13 de l'enceinte de confinement.

Un joint gonflable 14 résistant aux conditions thermiques de l'essai permet de réaliser l'étanchéité périphérique de la porte juste avant le tir.

L'exemple de réalisation concerne une enceinte de confinement de structure béton armé offrant un volume intérieur de près de 6 000 m3 (20 m X 18 m X 16 m, murs d'environ 60 cm d'épaisseur). L'ensemble est dimensionné selon des normes, règlements et standards connus tels que : Unified Facilities Criteria (UFC) "UFC 3-340-02 - 5 December 2008. Structures to resist the effects of accidental explosion".

Les gaz de combustion 4 générés par les objets contenant des poudres propulsives sont confinés à l'intérieur de l'enceinte grâce à l'étanchéité de la structure et des ouvertures : l'enceinte est ainsi mise en surpression (Δp < 200 mbar, pour 50 kg de propergol).

L'extraction est réalisée à l'aide d'un ventilateur 8 de débit de 6000 à 8000Nm³/h, par exemple de type ventilateur d'extraction à régulation en fréquence de 50 à 100 kW électriques. Le ventilateur 8 est disposé dans des conduits 5 amenant les gaz 4 depuis l'enceinte 1 vers l'unité de traitement 6.

Un rejet initial des gaz vers l'atmosphère pour faire chuter la pression de l'enceinte est bien entendu exclu et pour permettre l'utilisation de technologies de traitement des gaz existantes qui ne sont pas aisément compatibles avec un fonctionnement en pression du processus de traitement des gaz alors qu'après le confinement, l'enceinte est en surpression, l'invention prévoit de ramener l'enceinte de confinement à la pression atmosphérique tout en maintenant le confinement.

Pour diminuer la pression dans l'enceinte et dans le circuit d'amenée des gaz à l'unité de traitement, on crée une boucle d'air propre.

L'unité de traitement des gaz prélève de l'air extérieur 17 pour réaliser une veine d'air au débit nominal du procédé de traitement au moyen d'une entrée d'air 9.

A l'aide d'une électrovanne 7 disposée sur la hotte d'extraction, on réalise par une ouverture partielle une fuite contrôlée de l'enceinte dans la veine d'air propre vers le traitement des gaz. Ainsi, il n'est pas créé de surpression préjudiciable dans l'unité de traitement des gaz.

L'électrovanne forme un moyen adapté à mélanger les gaz à un flux d'air à pression atmosphérique réalisant une dilution des gaz.

De plus, comme représenté en figure 2, on asservit l'ouverture de l'électrovanne au suivi de la concentration de rejet d'un polluant de référence au niveau de la sortie de l'unité de traitement ce qui permet de s'assure que le débit de polluant injecté pour traitement n'excède pas les capacités réelles de traitement de l'installation et ainsi que les limites de rejet préconisées ne sont pas dépassées. Ceci permet d'éviter les phénomènes de "bouffées" non désirées.

L'asservissement se fait à partir d'une sonde de mesure 12 et de moyens d'asservissement 11 tels qu'un calculateur qui pilote les moyens d'amenée de gaz 7, 8 pour adapter le débit de gaz aux capacités de traitement de l'unité de traitement qui va dépolluer les rejets de la combustion.

Une fois la pression atmosphérique atteinte, le confinement dans le local d'essai ayant créé un tampon de stockage des gaz, il reste à assainir l'enceinte de confinement de l'ensemble des polluants présents.

Cette phase est représentée en figure 3.

A l'aide de différentes bouches d'apport d'air 10 réparties dans l'enceinte, on réalise un apport d'air extérieur 17 neuf de compensation simultanément à l'extraction réalisée par l'unité de traitement des gaz.

L'ouverture de ces bouches d'apport d'air extérieur dans l'enceinte est motorisée et commandée à distance et asservie à l'atteinte de la pression atmosphérique dans l'enceinte de confinement.

Cet asservissement prend en compte une mesure de pression 15 dans l'enceinte et est par exemple piloté par les moyens d'asservissement 11 déjà discutés.

La fonction de tampon de l'enceinte ayant permis de totalement dé-corréler le débit de combustion de l'objet pyrotechnique du débit de l'installation ou unité 6 de traitement des gaz, cette unité est alors dimensionnée sur la base du délai souhaité pour l'assainissement de l'enceinte.

La problématique de traitement des gaz de combustion pyrotechnique est ainsi simplement ramenée à une problématique classique de traitement de gaz industriels.

Les procédés retenus comportent notamment une élimination d'acide chlorhydrique par injection d'un sorbant sec par exemple de l'hydroxyde de calcium, une récupération des poussières, les oxydes métalliques; notamment par filtre à manche avec adjonction de sorbant sec tel que l'hydroxyde de calcium, une élimination des oxydes d'azote par réduction catalytique sélective, une élimination du monoxyde de carbone par oxydation catalytique.

L'invention rend notamment possible le traitement des oxydes d'azote, polluants pour lesquels un trop fort débit d'extraction rend le traitement impossible ou prohibitif.

Les grandes phases de traitement sont décrites ci-dessous.

Phase 1: Préchauffage unité de traitement (circuit fermé), vannes extraction fermées.

Phase 2: Fin de préparation essai, fermeture des issues et blindage des portes.

Phase 3: Mise en configuration fermée / étanche de la porte formée par le treillis d'évents.

Phase 4: Procédure de tir et mise à feu telle que représenté à la figure 1, la pression différentielle ΔP est alors de 100 à 200 mbar

Phase 5: Abaissement de la pression dans l'enceinte jusqu'à la pression atmosphérique Patm par extraction 9 d'air atmosphérique et fuite progressive 7 des gaz en surpression dans la veine d'extraction vers l'unité de traitement ce qui correspond au schéma de la figure 2 avec ΔP diminuant et tendant vers 0.

Phase 6: Ouverture des arrivées 10 d'air extérieur 17 selon la figure 3.

Phase 7: Extraction de l'air de l'enceinte et traitement jusqu'à obtenir des concentrations en polluants inférieures aux concentrations des seuils d'assainissement 16.

L'invention n'est pas limitée à l'exemple décrit et notamment, les procédés de dépollutions peuvent être adaptés en fonction des polluants contenus dans les gaz.

Le système de l'invention est en outre tout à fait adapté à la destruction de déchets pyrotechniques par combustion, en particulier sans nécessité de démonter les objets contenant ces produits.

## Revendications

1. -Système d'essai de dispositifs à poudres telles que des propergols, adapté à réaliser des essais sur des sous ensembles fonctionnels et comprenant, une enceinte de confinement (1) pourvue de moyens adaptés à la rendre étanche et une unité (6) de traitement de gaz, l'enceinte et l'unité de traitement des gaz étant reliées par des moyens d'amenée de gaz (5, 7, 8) pilotables sous forme d'une fuite contrôlée en sorte d'extraire un débit calibré de gaz issus des essais de l'enceinte (1) vers l'unité de traitement (6).
**caractérisé en ce qu'**il comprend au niveau des moyens d'amenée de gaz une prise d'air atmosphérique (9) et des moyens (7) adaptés à mélanger lesdits gaz à un
flux d'air à pression atmosphérique réalisant une dilution desdits gaz.

2. - Système d'essai de dispositifs à poudres selon la revendication. 1 caraciérisé en ce qu'il comprend des moyens d'asservissement (11) des moyens d'amenée pilotables en fonction d'une mesure d'une concentration d'un gaz polluant de référence (12).

3. - système d'essai de dispositifs à poudres selon la revendication 1 ou 2 **caractérisée en ce qu'**ii comprend des moyens (10) d'apport d'air extérieur (17) dans l'enceinte, ces moyens d'apport (10) comprenant un mécanisme d'ouverture motorisé et commandé à distance adapté à compenser la pression de l'enceinte lors de l'extraction des gaz réalisé par l'unité de traitement des gaz, le système comportant en outre des moyens (11) adaptés à asservir l'ouverture du mécanisme en fonction d'une consigne d'atteinte et de maintien de la pression atmosphérique dans l'enceinte de confinement.

4. - Système d'essai de dispositifs à poudres selon l'une quelconque des revendications précédentes **caractérisé en ce que** le volume de l'enceinte est adapté, pour une masse de propergols solides de l'ordre de 1 à 100 kg, à limiter la surpression dans l'enceinte à quelques centaines de millibars.

5. - Système d'essai de dispositifs à poudres selon l'une quelconque des revendications précédentes **caractérisé en ce que** le volume de l'enceinte en m3 est de l'ordre de cent à cent cinquante fois la masse en kg des poudres de type propergols solides.

6. - Système d'essai de dispositifs à poudres selon l'une quelconque des revendications précédentes **caractérisé en ce que** l'enceinte de confinement (1) est réalisée à partir d'un local en béton.

7. - Système d'essai de dispositifs à poudres selon la revendication 6 **caractérisé en ce que** l'enceinte de confinement comprend une porte étanche (13) munie de moyens soupape de sécurité.

8. - Système d'essai de dispositifs à poudres selon la revendication 7 **caractérisée en ce que** les moyens soupapes de sécurités sont constitués par
une pluralité d'évents d'explosions assemblés sur un treillis métallique.

9. - Système d'essai de dispositifs à poudres selon la revendication 6, 7 ou 8 **caractérisée en ce qu'**il comprend une ou plusieurs tôles d'acier côté face interne du local qui obturent chacune des traversées de parois lors de la mise en pression de l'enceinte.

10. - Système d'essai de dispositifs à poudres selon l'une quelconque des revendications précédentes **caractérisé en ce que** l'unité de traitement comprend des moyens de dépollution des gaz adaptés à réaliser au moins l'un des traitements suivants:
- une élimination d'acide chlorhydrique par injection d'un sorbant sec,
- une récupération des poussières,
- une élimination des oxydes d'azote par réduction catalytique sélective,
- une élimination du monoxyde de carbone par oxydation catalytique.

11. - Procédé d'essai de dispositifs à poudres avec traitement des effluents rejetés par ces essais, **caractérisé en ce que**:
- on procède à un essai de combustion des poudres du dispositif avec confinement des rejets de combustion dans une enceinte d'un volume adapté à recevoir un surcroît de gaz avec une variation de pression réduite, l'enceinte de confinement étant mise en surpression en cours d'essai,
- on ramène l'enceinte de confinement à la pression atmosphérique par transfert de gaz vers une unité de traitement des gaz sans rejet à l'atmosphère avec un débit adapté aux performances de l'unité de traitement et,
- on combine une dilution des gaz dans une veine d'air au transfert des gaz vers l'unité de traitement.

12. - Procédé d'essai de dispositifs à poudres selon la revendication 11 **caractérisé en ce que** l'on finalise la dépollution de l'enceinte de confinement par un balayage d'air extérieur (17) qui entraine les effluents résiduels vers l'unité de traitement.

## Patentansprüche

1. System zur Prüfung von Treibladungsanordnungen, wie Propergolen, das dazu vorgesehen ist, Prüfungen an funktionellen Teilanordnungen durchzuführen, umfassend einen Eingrenzungsraum (1), der mit Mitteln versehen ist, die dazu vorgesehen sind, ihn abzudichten, und eine Gasbehandlungseinheit (6), wobei der Raum und die Gasbehandlungseinheit durch steuerbare Gaszuleitungsmittel (5, 7, 8) in Form einer kontrollierten Leckage, um eine geeichte Gasmenge, die von den Prüfungen stammt, vom Raum (1) zur Behandlungseinheit (6) zu extrahieren, verbunden sind, **dadurch gekennzeichnet, dass** es im Bereich der Gaszuleitungsmittel eine Außenlufteinleitung (9) und Mittel (7) umfasst, die dazu vorgesehen sind, die Gase mit einem Luftstrom unter Luftdruck zu mischen, der eine Verdünnung der Gase durchführt.

2. System zur Prüfung von Treibladungsanordnungen nach Anspruch 1, **dadurch gekennzeichnet, dass** es Steuermittel (11) für die steuerbaren Zuleitungsmittel in Abhängigkeit von einer Messung einer Konzentration eines Referenzabgases (12) umfasst.

3. System zur Prüfung von Treibladungsanordnungen nach Anspruch 1 oder 2, **dadurch gekennzeichnet, dass** es Zuleitungsmittel (10) zur Zuleitung von Außenluft (17) in den Raum umfasst, wobei diese Zuleitungsmittel (10) einen motorisierten und ferngesteuerten Öffnungsmechanismus umfassen, der dazu vorgesehen ist, den Druck des Raums bei der Extraktion der Gase durch die Gasbehandlungseinheit auszugleichen, wobei das System ferner Mittel (11) umfasst, die dazu vorgesehen sind, das Öffnen des Mechanismus in Abhängigkeit von einem Sollwert für das Erreichen und Aufrechterhalten des Luftdrucks in dem Eingrenzungsraum zu steuern.

4. System zur Prüfung von Treibladungsanordnungen nach einem der vorhergehenden Ansprüche, **dadurch gekennzeichnet, dass** das Volumen des Raums bei einer Masse von festen Propergolen von ungefähr 1 bis 100 kg dazu geeignet ist, den Überdruck in dem Raum auf einige hunderten Millibar zu begrenzen.

5. System zur Prüfung von Treibladungsanordnungen nach einem der vorhergehenden Ansprüche, **dadurch gekennzeichnet, dass** das Volumen des Raums in m³ ungefähr hundert bis hundertfünfzigmal die Masse in kg der Treibladungen des Typs feste Propergole ausmacht.

6. System zur Prüfung von Treibladungsanordnungen nach einem der vorhergehenden Ansprüche, **dadurch gekennzeichnet, dass** der Eingrenzungsraum (1) aus einem Betonraum besteht.

7. System zur Prüfung von Treibladungsanordnungen nach Anspruch 6, **dadurch gekennzeichnet, dass** der Eingrenzungsraum eine dichte Tür (13) umfasst, die mit Sicherheitsventilmitteln versehen ist.

8. System zur Prüfung von Treibladungsanordnungen nach Anspruch 7, **dadurch gekennzeichnet, dass** die Sicherheitsventilmittel von einer Vielzahl von Explosionsöffnungen gebildet sind, die auf einem metallischen Gitter verbunden sind.

9. System zur Prüfung von Treibladungsanordnungen nach Anspruch 6, 7 oder 8, **dadurch gekennzeichnet, dass** es ein oder mehrere Stahlbleche auf der Innenseite des Raums umfasst, die jeweils Wanddurchgänge bei der Unterdrucksetzung des Raums verschließen.

10. System zur Prüfung von Treibladungsanordnungen nach einem der vorhergehenden Ansprüche, **dadurch gekennzeichnet, dass** die Behandlungseinheit Mittel zur Beseitigung der Verschmutzung der Gase umfasst, die geeignet sind, mindestens eine der folgenden Behandlungen durchzuführen:
- Beseitigung der Salzsäure durch Einspritzen eines trockenen Sorbens,
- Wiedergewinnung der Staubpartikel,
- Beseitigung der Stickstoffoxide durch selektive katalytische Reduktion,
- Beseitigung des Kohlenmonoxids durch katalytische Oxidation.

11. Verfahren zur Prüfung von Treibladungsanordnungen mit Behandlung der aus diesen Prüfungen abgehenden Ausflüsse, **dadurch gekennzeichnet, dass**:
- eine Verbrennungsprüfung der Treibladungen der Anordnung bei Eingrenzung der Verbrennungsrückstände in einem Raum mit einem geeigneten Volumen, um einen Gasüberschuss mit einer reduzierten Druckvariation aufzunehmen, durchgeführt wird, wobei der Eingrenzungsraum während der Prüfung unter Überdruck gesetzt wird,
- der Eingrenzungsraum wieder auf den Luftdruck durch Gasübertragung zu einer Gasbehandlungseinheit ohne Abgabe an die Atmosphäre in einer Menge, die für die Leistungen der Behandlungseinheit geeignet ist, gesetzt wird, und
- eine Verdünnung der Gase in einer Luftleitung mit der Übertragung der Gase zur Behandlungseinheit kombiniert wird.

12. Verfahren zur Prüfung von Treibladungsanordnungen nach Anspruch 11, **dadurch gekennzeichnet, dass** die Beseitigung der Verschmutzung des Eingrenzungsraums durch eine Außenluftspülung (17) beendet wird, die die Restausflüsse zur Behandlungseinheit mitnimmt.

## Claims

1. Test system for powder devices such as propellants suited to carrying out tests on functional subassemblies and comprising a containment (1) provided with means suited to sealing and a gas treatment unit (6), the containment and the gas treatment unit being connected by controllable gas conveying means (5, 7, 8) in the form of a controlled leakage so that a calibrated flow rate of gases resulting from the testing can be extracted from the containment (1) and conveyed to the treatment unit (6), **characterized in that** it comprises, on the gas conveying means, an atmospheric-air tapping (9) and means (7) suited to mixing the said gases with an airflow at atmospheric pressure, thus diluting the said gases.

2. Test system for powder devices according to Claim 1, **characterized in that** it comprises automatic-control means (11) for controlling the controllable conveying means on the basis of a measurement of a concentration of a reference pollutant gas (12).

3. For test system powder devices according to Claim 1 or 2, **characterized in that** it comprises supply means (10) for supplying external air (17) to the containment, these supply means (10) comprising a motorized and remote-controlled opening mechanism suited to compensating for the pressure in the containment during the extraction of gas performed by the gas treatment unit, the system further comprising means (11) suited to automatically controlling the opening of the mechanism on the basis of a setpoint regarding the attainment and maintenance of atmospheric pressure in the containment.

4. For test system powder devices according to any one of the preceding claims, **characterized in that** the volume of the containment is tailored, for a mass of solid propellant of the order of 1 to 100 kg, to limiting the overpressure in the containment to a few hundred millibar.

5. For test system powder devices according to any one of the preceding claims, **characterized in that** the volume of the containment in m³ is of the order of 100 to 150 times the mass in kg of the powders of solid propellant type.

6. For test system powder devices according to any one of the preceding claims, **characterized in that** the containment (1) is made from a concrete enclosure.

7. For test system powder devices according to Claim 6, **characterized in that** the containment comprises a sealed door (13) fitted with relief valve means.

8. For test system powder devices according to Claim 7, **characterized in that** the relief valve means consist of a plurality of explosion vents assembled on a metal lattice work.

9. For test system powder devices according to Claim 6, 7 or 8, **characterized in that** it comprises one or a plurality of steel sheets on the inside face of the enclosure each of which closes off one of the wall openings when the containment is pressurized.

10. For test system powder devices according to one of the preceding claims, **characterized in that** the treatment unit comprises means of removing pollution from the gases which are suited to carrying out at least one of the following treatments:
- elimination of hydrochloric acid by injection of a dry sorbent,
- collection of dust,
- elimination of nitrogen oxides using selective catalytic reduction,
- elimination of carbon monoxide using catalytic oxidation.

11. Method for testing powder devices with treatment of the effluents discharged by these tests, **characterized in that**:
- a powder combustion test is carried out on the device with the products of combustion contained within a containment of a volume suited to receiving an addition of gas with a small variation in pressure, the containment being placed at an overpressure during the test,
- the containment is returned to atmospheric pressure by transfer of gas to a gas treatment unit without discharging to the atmosphere and a flow rate suited to the performance of the treatment unit, and
- dilution of the gases in a stream of air is combined with the transfer of the gases to the treatment unit.

12. Method for testing powder devices according to Claim 11, **characterized in that** the depollution of the containment is finalized by flushing with external air (17) which carries any residual effluent to the treatment unit.
